(19) Europäisches Patentamt
European Patent Office
Office européen des brevets

(11) EP 3 885 159 B1

(12) **EUROPEAN PATENT SPECIFICATION**

(45) Date of publication and mention of the grant of the patent:
**30.11.2022 Bulletin 2022/48**

(21) Application number: **21160041.6**

(22) Date of filing: **01.03.2021**

(51) International Patent Classification (IPC):
***B60C 1/00*** *(2006.01)* ***C08L 15/00*** *(2006.01)*
***C08C 19/22*** *(2006.01)* ***C08C 19/25*** *(2006.01)*

(52) Cooperative Patent Classification (CPC):
(C-Sets available)
**C08C 19/25; B60C 1/0016; B60C 11/005; C08C 19/22; C08L 15/00;** B60C 2200/04 (Cont.)

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.03.2020 JP 2020040084**

(43) Date of publication of application:
**29.09.2021 Bulletin 2021/39**

(73) Proprietor: **Sumitomo Rubber Industries, Ltd.
Kobe-shi, Hyogo-ken 651-0072 (JP)**

(72) Inventor: **MATSUI, Ryoji
Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 2 565 053 EP-A1- 3 450 494
EP-A2- 0 754 574**

- **DATABASE WPI Week 199930 Thomson Scientific, London, GB; AN 1999-351936 XP002803804, & JP H11 129713 A (BRIDGESTONE CORP) 18 May 1999 (1999-05-18)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 885 159 B1

(52) Cooperative Patent Classification (CPC): (Cont.)

C-Sets
**C08L 15/00, C08K 3/04, C08K 3/36, C08L 7/00, C08L 9/00;**
**C08L 15/00, C08K 3/36, C08L 7/00, C08L 9/00, C08L 25/16**

## Description

BACKGROUND OF THE INVENTION

Field of the Invention

The present invention relates to a tire.

Description of the Background Art

For the purpose of imparting the required characteristics of tires such as low fuel consumption performance and grip performance, tires having a multi-layer tread have been proposed. For example, as a tire having reduced rolling resistance, a tire in which a tread portion having a high rate of contribution to these characteristics is formed to have a two-layer structure including a base tread (inner side) having low energy loss and a cap tread (outer side) having excellent wear resistance has been proposed.

Japanese Laid-Open Patent Publication No. 2012-111795 discloses a base tread rubber composition including a natural rubber, a butadiene rubber containing 1,2-syndiotactic polybutadiene crystals, a butadiene rubber synthesized by using a rare earth element catalyst, and a reinforcing agent in predetermined amounts, etc., but suppression of aged deterioration is desired for conventional tires having a multi-layer tread.

The present invention has been made in view of the above circumstances, and an object of the present invention is to provide a tire capable of improving combined performance of low fuel consumption performance, deterioration suppression performance, and chipping resistance.

SUMMARY OF THE INVENTION

The present invention is directed to a tire including a tread having two or more layers, wherein, of two layers adjacent to each other in a tire radial direction in the tread, an outer rubber layer on an outer side in the tire radial direction is formed from an outer rubber layer rubber composition containing a rubber component containing 25% by mass or more of an isoprene-based rubber and 25% by mass or more of a styrene-butadiene rubber, a silica having a nitrogen adsorption specific surface area of 200 $m^2/g$ or greater, sulfur, and a zinc-containing compound, and an inner rubber layer on an inner side in the tire radial direction is formed from an inner rubber layer rubber composition containing a rubber component and a zinc-containing compound, and the tire satisfies the following formula (1).
[Math. 1]

$$\begin{gathered}\text{amount of zinc element per 100 parts by mass of rubber component}\\ \text{contained in outer rubber layer rubber composition}\\ < \text{amount of zinc element per 100 parts by mass of rubber component}\\ \text{contained in inner rubber layer rubber composition}\end{gathered} \qquad (1)$$

The tire preferably satisfies the following formula.

[Math. 2]

$$\frac{\begin{gathered}\text{amount of zinc element per 100 parts by mass of rubber component}\\ \text{contained in outer rubber layer rubber composition}\end{gathered}}{\begin{gathered}\text{amount of zinc element per 100 parts by mass of rubber component}\\ \text{contained in inner rubber layer rubber composition}\end{gathered}} \leqq 0.7$$

The tire preferably satisfies the following formula (2).
[Math. 3]

$$\frac{\text{amount of sulfur per 100 parts by mass of rubber component contained in outer rubber laver rubber composition}}{\text{amount of vulcanization accelerator per 100 parts by mass of rubber component contained in outer rubber layer rubber composition}} \leqq 1.0 \quad (2)$$

In the tire, the inner rubber layer rubber composition preferably contains a resin having an unsaturated bond.

In the tire, the outer rubber layer rubber composition preferably contains a mercapto-based silane coupling agent.

An amount of the silica having a nitrogen adsorption specific surface area of 200 $m^2/g$ or greater per 100 parts by mass of the rubber component contained in the outer rubber layer rubber composition is preferably 5 to 170 parts by mass.

The tire preferably satisfies the following formula (3).

[Math. 4]

$$\frac{\text{total vinyl content of styrene-butadiene rubber contained in outer rubber layer rubber composition}}{\text{amount of silica having nitrogen adsorption specific surface area of 200 m}^2\text{/g or greater per 100 parts by mass of rubber component contained in outer rubber layer rubber composition}} \leqq 0.50 \quad (3)$$

The tire is preferably a pneumatic tire for a passenger car.

In the tire, a tire outer diameter Dt and a tire cross-section width Wt preferably satisfy a relational expression of the following formula (I).

[Math. 5]

$$1963.4 \leqq \frac{Dt^2 \times \frac{\pi}{4}}{Wt} \leqq 2827.4 \quad (I)$$

Since the tire according to the present invention is a tire including a tread having two or more layers, wherein, of two layers adjacent to each other in a tire radial direction in the tread, an outer rubber layer on an outer side in the tire radial direction is formed from an outer rubber layer rubber composition containing a rubber component containing 25% by mass or more of an isoprene-based rubber and 25% by mass or more of a styrene-butadiene rubber, a silica having a nitrogen adsorption specific surface area of 200 $m^2/g$ or greater, sulfur, and a zinc-containing compound, and an inner rubber layer on an inner side in the tire radial direction is formed from an inner rubber layer rubber composition containing a rubber component and a zinc-containing compound, and the tire satisfies the above formula (1), combined performance of low fuel consumption performance, deterioration suppression performance, and chipping resistance can be improved.

DESCRIPTION OF THE PREFERRED EMBODIMENTS

The tire according to the present invention is a tire including a tread having two or more layers, wherein, of two layers adjacent to each other in a tire radial direction in the tread, an outer rubber layer on an outer side in the tire radial direction is formed from an outer rubber layer rubber composition containing a rubber component containing 25% by mass or more of an isoprene-based rubber and 25% by mass or more of a styrene-butadiene rubber, a silica having a nitrogen adsorption specific surface area of 200 $m^2/g$ or greater, sulfur, and a zinc-containing compound, and an inner rubber layer on an inner side in the tire radial direction is formed from an inner rubber layer rubber composition containing a rubber component and a zinc-containing compound, and the tire satisfies the above formula (1). Accordingly, combined performance of low fuel consumption performance, deterioration suppression performance, and chipping resistance can be improved.

The mechanism for achieving such an effect is not clear but is inferred as described below.

In order to achieve low fuel consumption, it is conceivable to use, for a tread, a rubber composition containing: a rubber component mainly containing an isoprene-based rubber and a styrene-butadiene rubber (50% by mass or

more); and silica. In order to further reduce fuel consumption, it is conceivable to make the silica into fine particles. However, since the silica is easily taken into the styrene-butadiene rubber, and is difficult to disperse when the silica is made into fine particles, the silica and a silane coupling agent blended with the silica may be localized in the styrene-butadiene rubber. If such localization occurs, it is difficult to obtain reinforcing properties of the rubber composition as a whole, and, when sulfur radicals are generated, the sulfur radicals easily act, so that the reinforcing properties may be further reduced. If the reinforcing properties are reduced, the rubber composition may become a starting point of chipping. In the above tire, of the two layers adjacent to each other in the tire radial direction, the inner rubber layer on the inner side in the tire radial direction contains a large amount of the zinc-containing compound such as zinc oxide, which has a function of trapping radicals, as compared to the outer rubber layer on the outer side in the tire radial direction, so that it becomes easier to guide radicals toward the inner rubber layer. Since the inner rubber layer does not come into direct contact with a road surface, even if some sulfur radicals are generated, the inner rubber layer is less likely to affect chipping. As a result of the above function, it is inferred that combined performance of low fuel consumption performance, deterioration suppression performance, and chipping resistance can be improved by using the above tire.

The above tire includes a tread having two or more layers and can be applied to both a tread having a two-layer structure and a tread having a structure including three or more layers. Examples of layers forming a tread having two or more layers include a cap tread (rubber layer that is disposed on the outermost side in the tire radial direction and that comes into direct contact with a road surface), a base tread (rubber layer disposed inward of the cap tread in the tire radial direction), and rubber layers other than these layers (under tread (rubber layer disposed inward of the base tread in the tire radial direction), etc.).

The above tire satisfies the following formula (1).

[Math. 6]

$$\begin{array}{c}\text{amount of zinc element per 100 parts by mass of rubber component}\\ \text{contained in outer rubber layer rubber composition}\\ < \text{amount of zinc element per 100 parts by mass of rubber component}\\ \text{contained in inner rubber layer rubber composition}\end{array} \quad (1)$$

From the viewpoint of suppression of aged deterioration, amount of zinc element per 100 parts by mass of rubber component contained in outer rubber layer rubber composition / amount of zinc element per 100 parts by mass of rubber component contained in inner rubber layer rubber composition is preferably equal to or less than 0.90, more preferably equal to or less than 0.80, and further preferably equal to or less than 0.70. The upper limit is not particularly limited, but amount of zinc element per 100 parts by mass of rubber component contained in outer rubber layer rubber composition / amount of zinc element per 100 parts by mass of rubber component contained in inner rubber layer rubber composition is preferably equal to or greater than 0.30, more preferably equal to or greater than 0.40, and further preferably equal to or greater than 0.50.

The formula (1) can be satisfied by containing a zinc-containing compound in each of the outer rubber layer rubber composition and the inner rubber layer rubber composition and adjusting the amount of the zinc-containing compound therein to adjust the amount of zinc element therein.

In the tire, of the two layers adjacent to each other in the tire radial direction in the tread having two or more layers (the outer rubber layer on the outer side in the tire radial direction and the inner rubber layer on the inner side in the tire radial direction), the outer rubber layer is obtained from an outer rubber layer rubber composition based on a predetermined blending formula.

(Outer Rubber Layer Rubber Composition)

The outer rubber layer rubber composition contains an isoprene-based rubber and a styrene-butadiene rubber (SBR).

From the viewpoint of low fuel consumption performance and suppression of aged deterioration, the amount of the isoprene-based rubber in 100% by mass of a rubber component in the outer rubber layer rubber composition is not less than 25% by mass, preferably not less than 30% by mass, and more preferably not less than 35% by mass. The upper limit of the amount is not particularly limited, but the amount is preferably not greater than 80% by mass, more preferably not greater than 60% by mass, and further preferably not greater than 50% by mass.

Examples of the isoprene-based rubber include natural rubber (NR), isoprene rubber (IR), reformed NR, modified NR, and modified IR. As the NR, NRs that are generally used in the tire industry, such as SIR20, RSS#3, and TSR20, can be used. As the IR, IRs that are generally used in the tire industry, such as IR2200, can be used. Examples of the

reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. These rubbers may be used individually, or two or more of these rubbers may be used in combination.

From the viewpoint of low fuel consumption performance and suppression of aged deterioration, the amount of the SBR in 100% by mass of the rubber component in the outer rubber layer rubber composition is not less than 25% by mass, preferably not less than 35% by mass, more preferably not less than 45% by mass, and further preferably not less than 50% by mass. The upper limit of the amount is not particularly limited, but the amount is preferably not greater than 90% by mass, more preferably not greater than 80% by mass, and further preferably not greater than 70% by mass.

The SBR is not particularly limited, and, for example, SBRs that are generally used in the tire industry, such as an emulsion-polymerized SBR (E-SBR) and a solution-polymerized SBR (S-SBR), can be used as the SBR. These SBRs may be used individually, or two or more of these SBRs may be used in combination.

Here, the weight-average molecular weight (Mw) of the rubber component is preferably not less than 150 thousand, more preferably not less than 200 thousand, and further preferably not less than 250 thousand. The upper limit of the Mw is not particularly limited, but the Mw is preferably not greater than 4 million, more preferably not greater than 1 million, further preferably not greater than 700 thousand, and particularly preferably not greater than 500 thousand. When the Mw is set to be within the above range, aged deterioration tends to be able to be suppressed while good low fuel consumption performance is achieved.

The styrene content of the SBR is preferably not less than 5% by mass, more preferably not less than 10% by mass, and further preferably not less than 15% by mass, and is preferably not greater than 50% by mass, more preferably not greater than 40% by mass, further preferably not greater than 37% by mass, and particularly preferably not greater than 30% by mass. When the styrene content is set to be within the above range, aged deterioration tends to be able to be suppressed while good low fuel consumption performance is achieved.

The vinyl content of the SBR is preferably not less than 20% by mass, more preferably not less than 40% by mass, further preferably not less than 45% by mass, and particularly preferably not less than 55% by mass, and is preferably not greater than 70% by mass, more preferably not greater than 65% by mass, and further preferably not greater than 62% by mass. When the vinyl content is set to be within the above range, aged deterioration tends to be able to be suppressed while good low fuel consumption performance is achieved.

The SBR may be an unmodified SBR, or may be a modified SBR.

The modified SBR may be any SBR having a functional group that interacts with a filler such as silica, and examples of such a modified SBR include a terminal-modified SBR obtained by modifying at least one terminal of a modified SBR with a compound (modifier) having the functional group (a terminal-modified SBR having the functional group at a terminal thereof), a main chain-modified SBR having the functional group in the main chain thereof, a main chain/terminal-modified SBR having the functional group in the main chain and at a terminal thereof (for example, a main chain/terminal-modified SBR that has the functional group in the main chain thereof and in which at least one terminal thereof is modified with the modifier), and a terminal-modified SBR that is modified (coupled) by using a multifunctional compound having two or more epoxy groups in the molecule thereof and to which a hydroxyl group or an epoxy group is introduced. These modified SBRs may be used individually, or two or more of these modified SBRs may be used in combination.

Examples of the above-described functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have a substituent. Among them, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), an alkoxysilyl group (preferably, an alkoxysilyl group having 1 to 6 carbon atoms), and an amide group, are preferable.

For example, a BR modified with a compound (modifier) represented by the following formula, etc., are suitable for use as the modified SBR.

[Chem. 1]

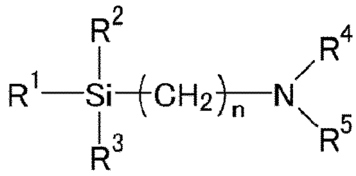

wherein $R^1$, $R^2$, and $R^3$ are the same or different from each other, and each represent an alkyl group, an alkoxy group, a silyloxy group, an acetal group, a carboxyl group (-COOH), a mercapto group (-SH), or a derivative thereof, $R^4$ and $R^5$ are the same or different from each other, and each represent a hydrogen atom or an alkyl group, $R^4$ and $R^5$ may be linked together to form a ring structure together with a nitrogen atom, and "n" represents an integer.

As $R^1$, $R^2$, and $R^3$, an alkoxy group is suitable (an alkoxy group preferably having 1 to 8 carbon atoms, more preferably 1 to 4 carbon atoms). As $R^4$ and $R^5$, an alkyl group (preferably, an alkyl group having 1 to 3 carbon atoms) is suitable. The integer "n" is preferably 1 to 5, more preferably 2 to 4, and further preferably 3. In addition, when $R^4$ and $R^5$ are linked together to form a ring structure together with a nitrogen atom, a four to eight-membered ring is preferably formed. Examples of the alkoxy group include cycloalkoxy groups (a cyclohexyloxy group, etc.) and aryloxy groups (a phenoxy group, a benzyloxy group, etc.).

Specific examples of the compound (modifier) represented by the above formula include 2-dimethylaminoethyl trimethoxysilane, 3-dimethylaminopropyl trimethoxysilane, 2-dimethylaminoethyl triethoxysilane, 3-dimethylaminopropyl triethoxysilane, 2-diethylaminoethyl trimethoxysilane, 3-diethylaminopropyl trimethoxysilane, 2-diethylaminoethyl triethoxysilane, and 3-diethylaminopropyl triethoxysilane. Among them, 3-dimethylaminopropyl trimethoxysilane, 3-dimethylaminopropyl triethoxysilane, and 3-diethylaminopropyl trimethoxysilane are preferable. These compounds may be used individually, or two or more of these compounds may be used in combination.

As the modified SBR, a modified BR modified with the following compound (modifier) is also suitable for use. Examples of the modifier include: polyglycidyl ethers of polyhydric alcohols, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl metaxylenediamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane;

sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl] sulfide;

N-substituted aziridine compounds such as ethyleneimine and propyleneimine; alkoxysilanes such as methyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-co-laurolactam, N-methyl-β-propiolactam, and N-phenyl-β-propiolactam; and moreover,

N,N-bis-(2,3-epoxypropoxy)-aniline, 4,4-methylene-bis-(N,N-glycidylaniline), tris-(2,3-epoxypropyl)-1,3,5-triazine-2,4,6-triones,N,N-diethylacetamide,N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. Among them, modified BRs modified with alkoxysilanes are preferable.

As the modified SBR modified with the compound (modifier) represented by the above formula, for example, an SBR obtained by modifying the polymerization terminals (active terminals) of a solution-polymerized styrene-butadiene rubber with the compound represented by the above formula, etc., are suitably used. Modification with the above compounds (modifiers) can be carried out by a known method.

As the SBR, for example, SBRs manufactured by and available from SUMITOMO CHEMICAL COMPANY, LIMITED, JSR Corporation, Asahi Kasei Corporation, Zeon Corporation, etc., can be used.

Other rubber components that can be used for the outer rubber layer rubber composition are not particularly limited, and rubbers used in the tire field, etc., can be used. Examples of the rubber component include diene-based rubbers such as butadiene rubber (BR), acrylonitrile-butadiene rubber (NBR), chloroprene rubber (CR), isobutylene-isoprene-rubber (IIR), and styrene-isoprene-butadiene copolymer rubber (SIBR). Among them, BR is preferable.

From the viewpoint of low fuel consumption performance and suppression of aged deterioration, the amount of the BR in 100% by mass of the rubber component in the outer rubber layer rubber composition is preferably not less than 5% by mass, more preferably not less than 10% by mass, and further preferably not less than 15% by mass. The upper limit of the amount is not particularly limited, but the amount is preferably not greater than 45% by mass, more preferably not greater than 35% by mass, and further preferably not greater than 30% by mass.

From the viewpoint of on-ice performance, the cis content of the BR is preferably not less than 80% by mass, more preferably not less than 85% by mass, further preferably not less than 90% by mass, and particularly preferably not less than 95% by mass.

The BR is not particularly limited, and examples of the BR include BRs that are generally used in the tire industry, such as a BR having a high cis content, a BR containing 1,2-syndiotactic polybutadiene crystals (SPB-containing BR), a butadiene rubber synthesized by using a rare earth element catalyst (rare earth BR), and a tin-modified butadiene rubber (tin-modified BR) modified with a tin compound. As for the BR, as commercially available products, products of Ube Industries, Ltd., JSR Corporation, Asahi Kasei Corporation, Zeon Corporation, etc., can be used. These BRs can be used individually, or two or more of these BRs may be used in combination.

The BR may be either an unmodified BR or a modified BR.

Examples of the modified BR include modified BRs into which the aforementioned functional group is introduced. The preferable mode of the modified BR is the same as that of the modified SBR.

In the present description, the Mw can be obtained by conversion, based on a polystyrene standard, of a value measured by gel permeation chromatography (GPC) (GPC-8000 series manufactured by Tosoh Corporation, detector: differential refractometer, column: TSKgel SuperMultipore HZ-M manufactured by Tosoh Corporation). The styrene content can be measured by $^1$H-NMR measurement, and the vinyl content (1,2-bond butadiene unit content) and the cis content (cis-1,4-bond butadiene unit content) can be measured by infrared absorption spectrometry.

The outer rubber layer rubber composition contains a silica having a nitrogen adsorption specific surface area ($N_2SA$) of 200 $m^2/g$ or greater.

The nitrogen adsorption specific surface area ($N_2SA$) of the silica is preferably not less than 220 $m^2/g$, more preferably not less than 225 $m^2/g$, and further preferably not less than 230 $m^2/g$. The upper limit of the $N_2SA$ of the silica is not particularly limited, but the $N_2SA$ of the silica is preferably not greater than 350 $m^2/g$, more preferably not greater than 300 $m^2/g$, further preferably not greater than 280 $m^2/g$, and particularly preferably not greater than 250 $m^2/g$. When the $N_2SA$ of the silica is set to be not greater than the upper limit, good dispersibility tends to be achieved. When the $N_2SA$ of the silica is set to be within the above range, aged deterioration tends to be able to be suppressed while good low fuel consumption performance is achieved.

The $N_2SA$ of the silica is a value measured by the BET method according to ASTM D3037-93.

The amount of the silica having a $N_2SA$ of 200 $m^2/g$ or greater per 100 parts by mass of the rubber component in the outer rubber layer rubber composition is preferably not less than 5 parts by mass, more preferably not less than 60 parts by mass, further preferably not less than 70 parts by mass, and particularly preferably not less than 90 parts by mass. The upper limit of the amount is not particularly limited, but the amount is preferably not greater than 170 parts by mass, more preferably not greater than 150 parts by mass, and particularly preferably not greater than 120 parts by mass. When the amount is set to be within the above range, aged deterioration tends to be able to be suppressed while good low fuel consumption performance is achieved.

Examples of silicas that can be used for the outer rubber layer rubber composition include dry-process silica (anhydrous silica) and wet-process silica (hydrous silica). Among them, wet-process silica is preferable for the reason that it has a higher silanol group content. As commercially available products, products of Degussa, Rhodia, Tosoh Silica Corporation, Solvay Japan, Ltd., Tokuyama Corporation, etc., can be used. These silicas may be used individually, or two or more of these silicas may be used in combination.

In the outer rubber layer rubber composition, from the viewpoint of low fuel consumption performance and

suppression of aged deterioration, the total vinyl content of the styrene-butadiene rubber contained in the outer rubber layer rubber composition (the total vinyl content of the styrene-butadiene rubber in 100 parts by mass of the rubber component contained in the outer rubber layer rubber composition) and the amount of the silica having a nitrogen adsorption specific surface area of 200 $m^2/g$ or greater per 100 parts by mass of the rubber component contained in the outer rubber layer rubber composition preferably satisfy the following formula (3).

[Math. 7]

$$\frac{\text{total vinyl content of styrene-butadiene rubber contained in outer rubber layer rubber composition}}{\text{amount of silica having nitrogen adsorption specific surface area of 200 m}^2\text{/g or greater per 100 parts by mass of rubber component contained in outer rubber layer rubber composition}} \leqq 0.50 \quad (3)$$

Total vinyl content of styrene-butadiene rubber contained in outer rubber layer rubber composition / amount of silica having nitrogen adsorption specific surface area of 200 $m^2/g$ or greater per 100 parts by mass of rubber component contained in outer rubber layer rubber composition is preferably equal to or less than 0.45, more preferably equal to or less than 0.40, further preferably equal to or less than 0.35, and particularly preferably equal to or less than 0.30. The lower limit is not particularly limited, but total vinyl content of styrene-butadiene rubber contained in outer rubber layer rubber composition / amount of silica having nitrogen adsorption specific surface area of 200 $m^2/g$ or greater per 100 parts by mass of rubber component contained in outer rubber layer rubber composition is preferably equal to or greater than 0.10, more preferably equal to or greater than 0.15, and further preferably equal to or greater than 0.20.

The total vinyl content of the styrene-butadiene rubber (total content of vinyl moieties contained in the entire styrene-butadiene rubber) is Σ(amount of each styrene-butadiene rubber × vinyl content of each styrene-butadiene rubber / 100). For example, in the case where the rubber component is composed of 90% by mass of an SBR (A) (vinyl content: 20% by mass), 5% by mass of an SBR (B) (vinyl content: 10% by mass), and 5% by mass of a BR (vinyl content: 2% by mass), the total vinyl content of the rubber component is 18.6% by mass (= (90 × 20/100 + 5 × 10/100 + 5 × 2/100)).

In the case where the outer rubber layer rubber composition contains silica, the outer rubber layer rubber composition preferably further contains a silane coupling agent.

The silane coupling agent is not particularly limited, and examples of the silane coupling agent include: sulfide-based silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto-based silane coupling agents such as 3-mercaptopropyltrimethoxysilane, 2-mercaptoethyltriethoxysilane, and NXT and NXT-Z manufactured by Momentive; vinyl-based silane coupling agents such as vinyltriethoxysilane and vinyltrimethoxysilane; amino-based silane coupling agents such as 3-aminopropyltriethoxysilane and 3-aminopropyltrimethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; and chloro-based silane coupling agents such as 3-chloropropyltrimethoxysilane and 3-chloropropyltriethoxysilane. As commercially available products, products of Degussa, Momentive, Shin-Etsu Silicones, Tokyo Chemical Industry Co., Ltd., AZmax.co, Dow Corning Toray Co., Ltd., etc., can be used. These silane coupling agents may be used individually, or two or more of these silane coupling agents may be used in combination.

Among the silane coupling agents, mercapto-based silane coupling agents are suitable. As mercapto-based silane coupling agents, in addition to compounds having a mercapto group, a compound having a structure in which a mercapto group is protected by a protecting group (for example, a compound represented by the following formula (S1)) can be used.

Examples of particularly suitable mercapto-based silane coupling agents include a silane coupling agent represented by the following formula (S1), and a silane coupling agent containing a linking unit A represented by the following formula (I) and a linking unit B represented by the following formula (II).

[Chem. 2]

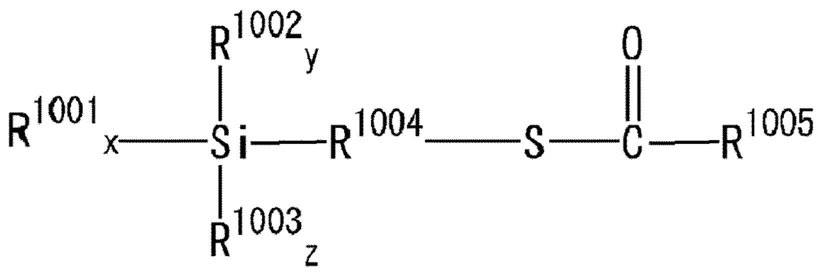

(S1)

wherein $R^{1001}$ represents a monovalent group selected from -Cl, -Br, $-OR^{1006}$, $-O(O=)CR^{1006}$,$-ON=CR^{1006}R^{1007}$, $-NR^{1006}R^{1007}$, and $-(OSiR^{1006}R^{1007})_h(OSiR^{1006}R^{1007}R^{1008})$ (wherein $R^{1006}$, $R^{1007}$, and $R^{1008}$ may be the same or may be different from each other and each represent a hydrogen atom or a monovalent hydrocarbon group having 1 to 18 carbon atoms, and an average of "h" is 1 to 4), $R^{1002}$ represents $R^{1001}$, a hydrogen atom, or a monovalent hydrocarbon group having 1 to 18 carbon atoms, $R^{1003}$ represents a $-[O(R^{1009}O)_j]-$ group ($R^{1009}$ is an alkylene group having 1 to 18 carbon atoms, and "j" is an integer from 1 to 4), $R^{1004}$ represents a divalent hydrocarbon group having 1 to 18 carbon atoms, $R^{1005}$ represents a monovalent hydrocarbon group having 1 to 18 carbon atoms, and "x", "y", and "z" are numerals that satisfy the relationships of $x + y + 2z = 3$, $0 \leq x \leq 3$, $0 \leq y \leq 2$, and $0 \leq z \leq 1$.

[Chem. 3]

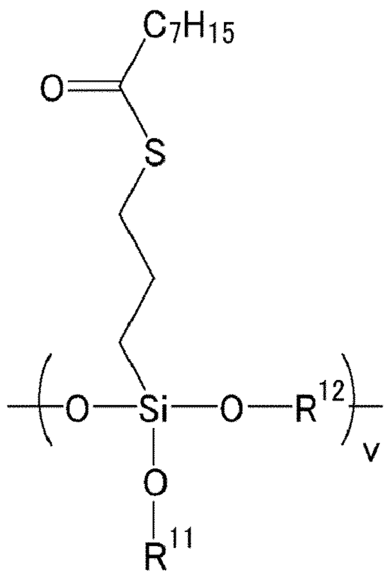

(I)

[Chem. 4]

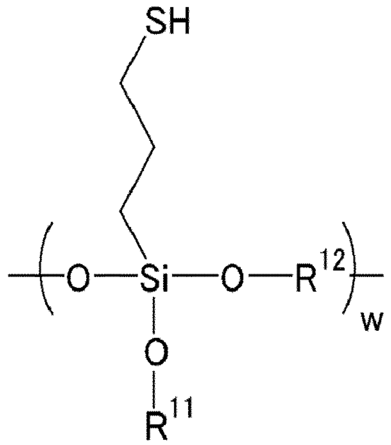

(II)

wherein v is an integer equal to or greater than 0, w is an integer equal to or greater than 1, $R^{11}$ represents hydrogen, a halogen, a branched or unbranched alkyl group having 1 to 30 carbon atoms, a branched or unbranched alkenyl group having 2 to 30 carbon atoms, a branched or unbranched alkynyl group having 2 to 30 carbon atoms, or a group obtained by substituting the hydrogen at the end of the alkyl group with a hydroxyl group or a carboxyl group, $R^{12}$ represents a branched or unbranched alkylene group having 1 to 30 carbon atoms, a branched or unbranched alkenylene group having 2 to 30 carbon atoms, or a branched or unbranched alkynylene group having 2 to 30 carbon atoms, and $R^{11}$ and $R^{12}$ may form a ring structure.

In formula (S1), preferably, $R^{1005}$, $R^{1006}$, $R^{1007}$, and $R^{1008}$ are each independently a group selected from the group consisting of linear, cyclic, or branched alkyl group, alkenyl group, aryl group, and aralkyl group each having 1 to 18 carbon atoms. In addition, in the case where $R^{1002}$ is a monovalent hydrocarbon group having 1 to 18 carbon atoms, $R^{1002}$ is preferably a group selected from the group consisting of linear, cyclic, or branched alkyl group, alkenyl group, aryl group, and aralkyl group. $R^{1009}$ is preferably a linear, cyclic, or branched alkylene group, and is particularly preferably a linear alkylene group. Examples of $R^{1004}$ include an alkylene group having 1 to 18 carbon atoms, an alkenylene group having 2 to 18 carbon atoms, a cycloalkylene group having 5 to 18 carbon atoms, a cycloalkylalkylene group having 6 to 18 carbon atoms, an arylene group having 6 to 18 carbon atoms, and an aralkylene group having 7 to 18 carbon atoms. The alkylene group and the alkenylene group may each be either linear or branched, and the cycloalkylene group, the cycloalkylalkylene group, the arylene group, and the aralkylene group may each have a functional group, such as a lower alkyl group, on the ring thereof. $R^{1004}$ is preferably an alkylene group having 1 to 6 carbon atoms, and is particularly preferably a linear alkylene group such as a methylene group, an ethylene group, a trimethylene group, a tetramethylene group, a pentamethylene group, and a hexamethylene group.

Specific examples of $R^{1002}$, $R^{1005}$, $R^{1006}$, $R^{1007}$, and $R^{1008}$ in formula (SI) include a methyl group, an ethyl group, an n-propyl group, an isopropyl group, an n-butyl group, an isobutyl group, a sec-butyl group, a tert-butyl group, a pentyl group, a hexyl group, an octyl group, a decyl group, a dodecyl group, a cyclopentyl group, a cyclohexyl group, a vinyl group, a propenyl group, an allyl group, a hexenyl group, an octenyl group, a cyclopentenyl group, a cyclohexenyl group, a phenyl group, a tolyl group, a xylyl group, a naphthyl group, a benzyl group, a phenethyl group, and a naphthylmethyl group.

Examples of the linear alkylene group as $R^{1009}$ in formula (S1) include a methylene group, an ethylene group, an n-propylene group, an n-butylene group, and a hexylene group, and examples of the branched alkylene group as $R^{1009}$ in formula (S1) include an isopropylene group, an isobutylene group, and a 2-methylpropylene group.

Specific examples of the silane coupling agent represented by formula (S1) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane. These silane coupling agents may be used individually, or two or more of these silane coupling agents may be used in combination. Among them, 3-octanoylthiopropyltriethoxysilane is particularly preferable.

In the silane coupling agent containing the linking unit A represented by formula (I) and the linking unit B represented by formula (II), the amount of the linking unit A is preferably not less than 30% by mole and more preferably not less than 50% by mole, and is preferably not greater than 99% by mole and more preferably not greater than 90%

by mole. In addition, the amount of the linking unit B is preferably not less than 1% by mole, more preferably not less than 5% by mole, and further preferably not less than 10% by mole, and is preferably not greater than 70% by mole, more preferably not greater than 65% by mole, and further preferably not greater than 55% by mole. Moreover, the total amount of the linking units A and B is preferably not less than 95% by mole, more preferably not less than 98% by mole, and particularly preferably 100% by mole.

The amount of the linking unit A or B is an amount including the case where the linking unit A or B is located at the end of the silane coupling agent. The mode in the case where the linking unit A or B is located at the end of the silane coupling agent is not particularly limited, and a unit corresponding to formula (I) or (II) representing the linking unit A or B may be formed.

As for $R^{11}$ in formulas (I) and (II), examples of the halogen include chlorine, bromine, and fluorine. Examples of the branched or unbranched alkyl group having 1 to 30 carbon atoms include a methyl group and an ethyl group. Examples of the branched or unbranched alkenyl group having 2 to 30 carbon atoms include a vinyl group and a 1-propenyl group. Examples of the branched or unbranched alkynyl group having 2 to 30 carbon atoms include an ethynyl group and a propynyl group.

As for $R^{12}$ in formulas (I) and (II), examples of the branched or unbranched alkylene group having 1 to 30 carbon atoms include an ethylene group and a propylene group. Examples of the branched or unbranched alkenylene group having 2 to 30 carbon atoms include a vinylene group and a 1-propenylene group. Examples of the branched or unbranched alkynylene group having 2 to 30 carbon atoms include an ethynylene group and a propynylene group.

In the silane coupling agent containing the linking unit A represented by formula (I) and the linking unit B represented by formula (II), the number of repetitions (v + w) that is the sum of the number of repetitions (v) of the linking unit A and the number of repetitions (w) of the linking unit B is preferably in the range of 3 to 300.

The amount of the silane coupling agent per 100 parts by mass of the silica is preferably not less than 3 parts by mass, more preferably not less than 6 parts by mass, and further preferably not less than 8 parts by mass. When the amount is not less than the lower limit, good fracture strength, etc., tend to be achieved. In addition, the amount is preferably not greater than 20 parts by mass and more preferably not greater than 15 parts by mass. When the amount is set to be within the above range, aged deterioration tends to be able to be suppressed while good low fuel consumption performance is achieved.

The outer rubber layer rubber composition preferably contains carbon black.

The amount of the carbon black per 100 parts by mass of the rubber component in the outer rubber layer rubber composition is preferably not less than 1 part by mass, more preferably not less than 3 parts by mass, and further preferably not less than 5 parts by mass. The upper limit of the amount is not particularly limited, but the amount is preferably not greater than 30 parts by mass, more preferably not greater than 15 parts by mass, and further preferably not greater than 8 parts by mass. When the amount is set to be within the above range, aged deterioration tends to be able to be suppressed while good low fuel consumption performance is achieved.

The nitrogen adsorption specific surface area ($N_2SA$) of the carbon black is preferably not less than 50 $m^2/g$, more preferably not less than 80 $m^2/g$, and further preferably not less than 100 $m^2/g$. In addition, the $N_2SA$ is preferably not greater than 150 $m^2/g$, more preferably not greater than 130 $m^2/g$, and further preferably not greater than 120 $m^2/g$. When the $N_2SA$ is set to be within the above range, aged deterioration tends to be able to be suppressed while good low fuel consumption performance is achieved.

The nitrogen adsorption specific surface area of the carbon black is obtained according to JIS K6217-2: 2001.

The carbon black is not particularly limited, but examples of the carbon black include N134, N110, N220, N234, N219, N339, N330, N326, N351, N550, and N762. As commercially available products, products of Asahi Carbon Co., Ltd., Cabot Japan K.K., Tokai Carbon Co., Ltd., Mitsubishi Chemical Corporation, Lion Corporation, NIPPON STEEL Carbon Co.,Ltd., Columbia Carbon Co., etc., can be used. These carbon blacks may be used individually, or two or more of these carbon blacks may be used in combination.

The outer rubber layer rubber composition contains a zinc-containing compound. Examples of the zinc-containing compound include zinc oxide, basic zinc carbonate, zinc dithiophosphate compounds, zinc fatty acids, zinc hydroxide, and zinc carboxylates (zinc stearate, etc.). In addition, a fine particle zinc carrier in which zinc oxide fine particles or basic zinc carbonate fine particles are carried on the surfaces of silicate particles can also be used. Among them, zinc oxide and zinc stearate are suitable for use.

The amount of zinc element (the amount of zinc contained in the zinc-containing compound) per 100 parts by mass of the rubber component in the outer rubber layer rubber composition is preferably not less than 0.5 parts by mass, more preferably not less than 1.0 part by mass, further preferably not less than 1.2 parts by mass, and particularly preferably not less than 1.4 parts by mass. The upper limit of the amount is not particularly limited, but the amount is preferably not greater than 3.0 parts by mass, more preferably not greater than 2.5 parts by mass, further preferably not greater than 2.0 parts by mass, and particularly preferably not greater than 1.8 parts by mass. When the amount is set to be within the above range, aged deterioration tends to be able to be suppressed while good low fuel consumption performance is achieved.

As the zinc-containing compound, a conventionally known one can be used, and, for example, zinc oxide products, etc., of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

The outer rubber layer rubber composition preferably contains a liquid plasticizer (plasticizer in liquid form at 20°C), a resin, etc. The resin refers to a resin in solid form at normal temperature (25°C). The outer rubber layer rubber composition is particularly preferably a rubber composition in which a resin is blended with a rubber component containing an SBR, a BR, and an isoprene-based rubber.

The amount of the liquid plasticizer per 100 parts by mass of the rubber component in the outer rubber layer rubber composition is preferably not less than 3 parts by mass, more preferably not less than 5 parts by mass, and further preferably not less than 8 parts by mass. The upper limit of the amount is not particularly limited, but the amount is preferably not greater than 30 parts by mass, more preferably not greater than 20 parts by mass, and further preferably not greater than 15 parts by mass. When the amount is set to be within the above range, aged deterioration tends to be able to be suppressed while good low fuel consumption performance is achieved.

The liquid plasticizer is not particularly limited, and examples of the liquid plasticizer include oils, liquid resins, and liquid diene-based polymers. These plasticizers may be used individually, or two or more of these plasticizers may be used in combination.

Examples of the oils include process oils, vegetable oils, and mixtures thereof. As the process oil, for example, paraffinic process oil, aromatic process oil, naphthenic process oil, or the like can be used. Examples of the vegetable oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. As commercially available products, products of Idemitsu Kosan Co., Ltd., Sankyo Yuka Kogyo K.K., ENEOS Corporation, Olisoy, H&R, Hokoku Corporation, Showa Shell Sekiyu K.K., FUJI KOSAN COMPANY, LTD., The Nisshin OilliO Group, Ltd., etc., can be used.

Examples of the liquid resins include terpene-based resins (including terpene-phenol resins and aromatic modified terpene resins), rosin resins, styrene-based resins, C5-based resins, C9-based resins, C5/C9-based resins, dicyclopentadiene (DCPD) resins, coumarone-indene-based resins (including coumarone resins and indene resins), phenol resins, olefin-based resins, polyurethane resins, and acrylic resins that are in liquid form at 20°C.

Examples of the liquid diene-based polymers include liquid styrene-butadiene copolymers (liquid SBRs), liquid butadiene polymers (liquid BRs), liquid isoprene polymers (liquid IRs), liquid styrene-isoprene copolymers (liquid SIRs), liquid styrene-butadiene-styrene block copolymers (liquid SBS block polymers), liquid styrene-isoprene-styrene block copolymers (liquid SIS block polymers), liquid farnesene polymers, and liquid farnesenebutadiene copolymers that are in liquid form at 20°C. The terminals and the main chains of these polymers may be modified with polar groups.

The amount of the resin per 100 parts by mass of the rubber component in the outer rubber layer rubber composition is preferably not less than 3 parts by mass, more preferably not less than 5 parts by mass, and further preferably not less than 8 parts by mass. The upper limit of the amount is not particularly limited, but the amount is preferably not greater than 30 parts by mass, more preferably not greater than 20 parts by mass, and further preferably not greater than 15 parts by mass. When the amount is set to be within the above range, aged deterioration tends to be able to be suppressed while good low fuel consumption performance is achieved.

The softening point of the resin is preferably not lower than 10°C, more preferably not lower than 50°C, further preferably not lower than 70°C, and particularly preferably not lower than 80°C. In addition, the softening point is preferably not higher than 180°C, more preferably not higher than 150°C, and further preferably not higher than 120°C. When the softening point is set to be within the above range, aged deterioration tends to be able to be suppressed while good low fuel consumption performance is achieved.

The softening point of the resin is a softening point that is measured with a ring and ball softening point measuring device according to JIS K6220-1: 2001 and that is a temperature at which a ball has descended.

As the resin, for example, a resin having an unsaturated bond (a double bond or a triple bond in a chain compound, an unsaturated bond in a cyclic compound, etc.) is suitable for use. Specific examples of the resin include aromatic vinyl polymers, coumarone-indene resins, coumarone resins, indene resins, phenol resins, rosin resins, petroleum resins, terpene-based resins, and acrylic-based resins. As commercially available products, products of Maruzen Petrochemical Co., Ltd., Sumitomo Bakelite Co., Ltd., YASUHARA CHEMICAL CO., LTD., Tosoh Corporation, Rutgers Chemicals AG, BASF, Arizona Chemical Company, NITTO CHEMICAL CO., LTD., NIPPON SHOKUBAI CO., LTD., ENEOS Corporation, Arakawa Chemical Industries, Ltd., Taoka Chemical Co., Ltd., TOAGOSEI CO., LTD., Struktol Company of America, Performance Additives Sdn. Bhd., Mitsui Chemicals, Inc., etc., can be used. These resins may be used individually, or two or more of these resins may be used in combination.

The aromatic vinyl polymers refer to resins obtained by polymerizing $\alpha$-methylstyrene and/or styrene, and examples of such resins include styrene homopolymers (styrene resins), $\alpha$-methylstyrene homopolymers (a-methylstyrene resins), copolymers of a-methylstyrene and styrene, and copolymers of styrene and other monomers. In addition, as the aromatic vinyl polymers, an ethylene-propylene-styrene copolymer, etc., are preferable. The ethylene propylene

content (EP content) in 100% by mass of the ethylene-propylene-styrene copolymer is preferably not less than 70% by mass and more preferably not less than 80% by mass, and is preferably not greater than 98% by mass and more preferably not greater than 95% by mass. Among them, styrene homopolymers, α-methylstyrene homopolymers, and copolymers of α-methylstyrene and styrene are preferable.

The coumarone-indene resins refer to resins that contain coumarone and indene as main monomer components that form the backbone (main chain) of the resins. Examples of the monomer components included in the backbone other than coumarone and indene include styrene, α-methylstyrene, methylindene, and vinyltoluene.

The coumarone resins refer to resins that contain coumarone as a main monomer component that forms the backbone (main chain) of the resins.

The indene resins refer to resins that contain indene as a main monomer component that forms the backbone (main chain) of the resins.

Examples of the phenol resins include resins obtained by reacting phenol with aldehydes such as formaldehyde, acetaldehyde, and furfural by an acid or alkali catalyst. Among them, resins obtained by reaction using an acid catalyst (novolac type phenol resins, etc.) are preferable.

Examples of the rosin resins include rosin-based resins typified by natural rosin, polymerized rosin, modified rosin, ester compounds of these rosins, and hydrogenated products of these rosins.

Examples of the petroleum resins include C5-based resins, C9-based resins, C5/C9-based resins, and dicyclopentadiene (DCPD) resins.

As the terpene-based resin, polyterpene resins each obtained by polymerizing a terpene compound, aromatic modified terpene resins each obtained by polymerizing a terpene compound and an aromatic compound, etc., can be used. Moreover, hydrogenated products of these resins can also be used.

The polyterpene resins refer to resins obtained by polymerizing terpene compounds. The terpene compounds are hydrocarbons represented by a composition of $(C_5H_8)_n$ and oxygenated derivatives thereof, and are compounds having, as a basic backbone, a terpene classified into monoterpene ($C_{10}H_{16}$), sesquiterpene ($C_{15}H_{24}$), diterpene ($C_{20}H_{32}$), and the like. Examples of the terpene compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include pinene resins, limonene resins, dipentene resins, and pinene/limonene resins that are formed from the above-described terpene compounds. Among them, pinene resins are preferable since a polymerization reaction is easy and since natural pine resin is a raw material, and thus the cost is low. In general, pinene resins include both α-pinene and β-pinene, which are isomeric with each other. Depending on the contained components, pinene resins are classified into β-pinene resins containing β-pinene as a main component, and α-pinene resins containing α-pinene as a main component.

Examples of the aromatic modified terpene resins include terpene-phenol resins formed from the above terpene compounds and phenol-based compounds, and terpene-styrene resins formed from the above terpene compounds and styrene-based compounds. Moreover, terpene-phenol-styrene resins formed from the above terpene compounds, phenol-based compounds, and styrene-based compounds can also be used. Examples of the phenol-based compounds include phenol, bisphenol A, cresol, and xylenol. Examples of the styrene-based compounds include styrene and α-methylstyrene.

As the acrylic-based resin, styrene-acrylic-based resins, such as a styrene acrylic resin, having a carboxyl group and obtained by copolymerizing an aromatic vinyl monomer component and an acrylic-based monomer component can be used. Among them, a non-solvent type carboxyl group-containing styrene-acrylic-based resin is suitable for use.

The non-solvent type carboxyl group-containing styrene-acrylic-based resin refers to a (meth)acrylic-based resin (polymer) synthesized by a high-temperature continuous polymerization method (high-temperature continuous bulk polymerization method) (the methods disclosed in US Patent No. 4,414,370, Japanese Laid-Open Patent Publication No. S59-6207, Japanese Examined Patent Publication No. H5-58005, Japanese Laid-Open Patent Publication No. H1-313522, US Patent No. 5,010,166, annual research report of Toagosei Co., Ltd., TREND 2000, No. 3, pages 42-45, etc.) by avoiding use of a polymerization initiator, a chain transfer agent, an organic solvent, etc., which are sub-materials, as much as possible. In the present specification, (meth)acrylic means methacrylic and acrylic.

Examples of the acrylic monomer component that forms the acrylic-based resin include (meth)acrylic acid, (meth)acrylic acid esters (alkyl esters such as 2-ethylhexyl acrylate, aryl esters, aralkyl esters, etc.), (meth)acrylamide, and (meth)acrylic acid derivatives such as (meth)acrylamide derivatives. (Meth)acrylic acid is a generic term for acrylic acid and methacrylic acid.

Examples of the aromatic vinyl monomer component that forms the acrylic-based resin include aromatic vinyls such as styrene, α-methylstyrene, vinyltoluene, vinylnaphthalene, divinylbenzene, trivinylbenzene, and divinylnaphthalene.

Moreover, as the monomer component that forms the acrylic-based resin, another monomer component may be used together with (meth)acrylic acid, a (meth)acrylic acid derivative, or an aromatic vinyl.

From the viewpoint of crack resistance, ozone resistance, etc., the outer rubber layer rubber composition preferably contains an antioxidant.

The antioxidant is not particularly limited, but examples of the antioxidant include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol antioxidants such as 2,6-di-t-butyl-4-methylphenol and styrenated phenol; and bis-, tris-, and poly-phenol antioxidants such as tetrakis-[methylene-3-(3',5'-di-t-butyl-4'-hydroxyphenyl)propionate]methane. Among them, the p-phenylenediamine antioxidants and the quinoline-based antioxidants are preferable, and N-(1,3-dimethylbutyl)-N'-phenyl-p-phenylenediamine and a polymer of 2,2,4-trimethyl-1,2-dihydroquinoline are more preferable. As commercially available products, for example, products of Seiko Chemical Co., Ltd., SUMITOMO CHEMICAL COMPANY, LIMITED, Ouchi Shinko Chemical Industrial Co., Ltd., Flexsys, etc., can be used.

The amount of the antioxidant per 100 parts by mass of the rubber component in the outer rubber layer rubber composition is preferably not less than 0.2 parts by mass and more preferably not less than 0.5 parts by mass. When the amount is set to be not less than the lower limit, sufficient ozone resistance tends to be achieved. The amount is preferably not greater than 7.0 parts by mass and more preferably not greater than 4.0 parts by mass. When the amount is set to be not greater than the upper limit, good tire appearance tends to be achieved.

The outer rubber layer rubber composition preferably contains stearic acid. The amount of the stearic acid per 100 parts by mass of the rubber component is preferably 0.5 to 10 parts by mass and more preferably 0.5 to 5 parts by mass.

As the stearic acid, a conventionally known one can be used, and, for example, products of NOF Corporation, Kao Corporation, FUJIFILM Wako Pure Chemical Industries, Ltd., New Japan Chemical Co., Ltd., etc., can be used.

The outer rubber layer rubber composition may contain a wax. The amount of the wax per 100 parts by mass of the rubber component is preferably 0.1 to 5.0 parts by mass and more preferably 0.5 to 3.0 parts by mass.

The wax is not particularly limited, and examples of the wax include petroleum waxes and natural waxes. In addition, a synthetic wax obtained by refining or chemically treating a plurality of waxes can also be used. These waxes may be used individually, or two or more of these waxes may be used in combination. Examples of the petroleum waxes include paraffin wax and microcrystalline wax. The natural waxes are not particularly limited as long as the natural waxes are derived from materials other than petroleum. Examples of the natural waxes include: vegetable waxes such as candelilla wax, carnauba wax, Japan wax, rice wax, and jojoba wax; animal waxes such as beeswax, lanolin, and whale wax; mineral waxes such as ozokerite, ceresin, and petrolatum; and refined products thereof. As commercially available products, for example, products of Ouchi Shinko Chemical Industrial Co., Ltd., NIPPON SEIRO CO., LTD., Seiko Chemical Co., Ltd., etc. can be used. The amount of the wax may be set as appropriate in view of ozone resistance and cost.

The outer rubber layer rubber composition contains sulfur.

The amount of the sulfur per 100 parts by mass of the rubber component in the outer rubber layer rubber composition is preferably not less than 0.1 parts by mass, more preferably not less than 0.5 parts by mass, further preferably not less than 0.7 parts by mass, and particularly preferably not less than 0.9 parts by mass. The amount is preferably not greater than 5.0 parts by mass, more preferably not greater than 3.0 parts by mass, further preferably not greater than 2.0 parts by mass, and particularly preferably not greater than 1.8 parts by mass. When the amount is set to be within the above range, aged deterioration tends to be able to be suppressed while good low fuel consumption performance is achieved.

Examples of the sulfur include powdery sulfur, precipitated sulfur, colloidal sulfur, insoluble sulfur, highly dispersible sulfur, and soluble sulfur, which are generally used in the rubber industry. As commercially available products, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used. These sulfurs may be used individually, or two or more of these sulfurs may be used in combination.

The outer rubber layer rubber composition preferably contains a vulcanization accelerator.

The amount of the vulcanization accelerator per 100 parts by mass of the rubber component in the outer rubber layer rubber composition is preferably not less than 0.5 parts by mass, more preferably not less than 2.0 parts by mass, further preferably not less than 3.0 parts by mass, and particularly preferably not less than 3.5 parts by mass. The amount is preferably not greater than 10.0 parts by mass, more preferably not greater than 7.0 parts by mass, further preferably not greater than 6.0 parts by mass, and particularly preferably not greater than 5.0 parts by mass. When the amount is set to be within the above range, aged deterioration tends to be able to be suppressed while good low fuel consumption performance is achieved.

The type of the vulcanization accelerator is not particularly limited, and vulcanization accelerators that are normally used can be used. Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD),

and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination. Among them, sulfenamide-based vulcanization accelerators and guanidine-based vulcanization accelerators are preferable.

In the outer rubber layer rubber composition, from the viewpoint of low fuel consumption performance and suppression of aged deterioration, the amounts of the sulfur and the vulcanization accelerator per 100 parts by mass of the rubber component contained in the outer rubber layer rubber composition preferably satisfy the following formula (2).

[Math. 8]

$$\frac{\text{amount of sulfur per 100 parts by mass of rubber component contained in outer rubber layer rubber composition}}{\text{amount of vulcanization accelerator per 100 parts by mass of rubber component contained in outer rubber layer rubber composition}} \leqq 1.0 \qquad (2)$$

Amount of sulfur per 100 parts by mass of rubber component contained in outer rubber layer rubber composition / amount of vulcanization accelerator per 100 parts by mass of rubber component contained in outer rubber layer rubber composition is preferably equal to or less than 0.9, more preferably equal to or less than 0.7, and further preferably equal to or less than 0.5. The lower limit is not particularly limited, but amount of sulfur per 100 parts by mass of rubber component contained in outer rubber layer rubber composition / amount of vulcanization accelerator per 100 parts by mass of rubber component contained in outer rubber layer rubber composition is preferably equal to or greater than 0.1, more preferably equal to or greater than 0.2, and further preferably equal to greater than 0.3.

In addition to the above components, the outer rubber layer rubber composition may contain ingredients that are generally used in the tire industry, for example, materials such as a mold lubricant, as appropriate.

The outer rubber layer rubber composition is preferably applied to a rubber layer (cap tread, etc.) that is in a tread having two or more layers and that comes into direct contact with a road surface.

(Inner Rubber Layer Rubber Composition)

The inner rubber layer rubber composition contains a rubber component and a zinc-containing compound.

As the rubber component, for example, the rubber components described for the outer rubber layer rubber composition can be used. Among them, an isoprene-based rubber and BR are suitable for use.

From the viewpoint of low fuel consumption performance and suppression of aged deterioration, the amount of the isoprene-based rubber in 100% by mass of the rubber component in the inner rubber layer rubber composition is preferably not less than 5% by mass, more preferably not less than 30% by mass, and further preferably not less than 50% by mass. The upper limit of the amount is not particularly limited, but the amount is preferably not greater than 90% by mass, more preferably not greater than 75% by mass, and further preferably not greater than 65% by mass.

From the viewpoint of low fuel consumption performance and suppression of aged deterioration, the amount of the BR in 100% by mass of the rubber component in the inner rubber layer rubber composition is preferably not less than 5% by mass, more preferably not less than 25% by mass, and further preferably not less than 35% by mass. The upper limit of the amount is not particularly limited, but the amount is preferably not greater than 90% by mass, more preferably not greater than 60% by mass, and further preferably not greater than 50% by mass.

As the zinc-containing compound, for example, the compounds described for the outer rubber layer rubber composition can be used. Among them, zinc oxide and basic zinc carbonate are suitable for use.

The amount of zinc element (the amount of zinc contained in the zinc-containing compound) per 100 parts by mass of the rubber component in the inner rubber layer rubber composition is preferably not less than 1.0 part by mass, more preferably not less than 1.5 parts by mass, further preferably not less than 2.0 parts by mass, and particularly preferably not less than 2.2 parts by mass. The upper limit of the amount is not particularly limited, but the amount is preferably not greater than 4.0 parts by mass, more preferably not greater than 3.5 parts by mass, further preferably not greater than 3.0 parts by mass, and particularly preferably not greater than 2.8 parts by mass. When the amount is set to be within the above range, aged deterioration tends to be able to be suppressed while good low fuel consumption performance is achieved.

The inner rubber layer rubber composition preferably contains silica. As the silica, for example, a silica having an $N_2SA$ less than 200 $m^2/g$ can be used in addition to the silicas described for the outer rubber layer rubber composition.

The amount of the silica per 100 parts by mass of the rubber component in the inner rubber layer rubber composition is preferably not less than 5 parts by mass, more preferably not less than 15 parts by mass, and further preferably not less than 25 parts by mass. In addition, the amount is preferably not greater than 150 parts by mass, more preferably not greater than 100 parts by mass, and further preferably not greater than 50 parts by mass.

In the case where the inner rubber layer rubber composition contains silica, the inner rubber layer rubber composition preferably further contains a silane coupling agent. As the silane coupling agent, for example, the silane coupling agents described for the outer rubber layer rubber composition can be used, and the same amount as that in the outer rubber layer rubber composition is suitable.

The inner rubber layer rubber composition preferably contains carbon black. As the carbon black, for example, the carbon blacks described for the outer rubber layer rubber composition can be used.

The amount of the carbon black per 100 parts by mass of the rubber component in the inner rubber layer rubber composition is preferably not less than 1 part by mass, more preferably not less than 10 parts by mass, and further preferably not less than 15 parts by mass. In addition, the amount is preferably not greater than 50 parts by mass, more preferably not greater than 45 parts by mass, and further preferably not greater than 40 parts by mass.

The inner rubber layer rubber composition preferably contains a liquid plasticizer (plasticizer in liquid form at 20°C), a resin (resin in solid form at normal temperature (25°C)), etc. As the liquid plasticizer and the resin, for example, the liquid plasticizers and the resins described for the outer rubber layer rubber composition are suitable for use. In particular, as the resin, a resin having an unsaturated bond is preferable, an aromatic vinyl polymer is more preferable, and an ethylene-propylene-styrene copolymer is further preferable.

The amount of the liquid plasticizer per 100 parts by mass of the rubber component in the inner rubber layer rubber composition is preferably not less than 3 parts by mass, more preferably not less than 5 parts by mass, and further preferably not less than 8 parts by mass. The upper limit of the amount is not particularly limited, but the amount is preferably not greater than 30 parts by mass, more preferably not greater than 20 parts by mass, and further preferably not greater than 15 parts by mass. When the amount is set to be within the above range, aged deterioration tends to be able to be suppressed while good low fuel consumption performance is achieved.

The amount of the resin per 100 parts by mass of the rubber component in the inner rubber layer rubber composition is preferably not less than 1 part by mass, more preferably not less than 3 parts by mass, and further preferably not less than 5 parts by mass. The upper limit of the amount is not particularly limited, but the amount is preferably not greater than 30 parts by mass, more preferably not greater than 20 parts by mass, and further preferably not greater than 15 parts by mass. When the amount is set to be within the above range, aged deterioration tends to be able to be suppressed while good low fuel consumption performance is achieved.

The inner rubber layer rubber composition may contain materials such as the above-described antioxidant, stearic acid, wax, sulfur, vulcanization accelerator, and lubricant, as appropriate. The blending amounts of these materials may be adjusted as appropriate.

The inner rubber layer rubber composition can be applied to a rubber layer that is in a tread having two or more layers and that does not come into direct contact with a road surface, and is preferably used for a base tread, etc.

As each of methods for producing the outer rubber layer rubber composition and the inner rubber layer rubber composition, a known method can be used. For example, each of the outer rubber layer rubber composition and the inner rubber layer rubber composition can be produced by a method in which the above respective components are kneaded using a rubber kneading device such as an open roll and a Banbury mixer and then vulcanization is performed.

As for the kneading conditions, in a base kneading step of kneading the additives other than a vulcanizing agent and the vulcanization accelerator, the kneading temperature is normally 50 to 200°C and preferably 80 to 190°C, and the kneading time is normally 30 seconds to 30 minutes and preferably 1 minute to 30 minutes. In a finish kneading step of kneading the vulcanizing agent and the vulcanization accelerator, the kneading temperature is normally not higher than 100°C and preferably room temperature to 80°C. In addition, a composition obtained by kneading the vulcanizing agent and the vulcanization accelerator is normally subjected to vulcanization processing such as press vulcanization. The vulcanization temperature is normally 120 to 200°C and preferably 140 to 180°C.

The tire is produced by a normal method using the above-described outer rubber layer rubber composition and inner rubber layer rubber composition. Specifically, an unvulcanized tire is formed by extruding an outer rubber layer rubber composition and an inner rubber layer rubber composition each obtained by blending each component, in an unvulcanized state so as to correspond to the shapes of members such as a cap tread and a base tread, and shaping the extruded rubber compositions together with other tire members on a tire shaping machine by a general method. A tire is obtained by heating and pressurizing the unvulcanized tire in a vulcanizing machine.

In the tire, a tire outer diameter Dt and a tire cross-section width Wt preferably satisfy a relational expression of the following formula (I).

[Math. 9]

$$1963.4 \leq \frac{Dt^2 \times \frac{\pi}{4}}{Wt} \leq 2827.4 \quad (I)$$

The tire outer diameter (Dt) is the outer diameter of the tire in a state where the tire is fitted to an applicable rim and no load is applied to the tire. The tire cross-section width (Wt) is the width obtained by excluding patterns and characters on the side surfaces of the tire from the total width. The total width is the linear distance between sidewalls including all such as the patterns or characters on the side surfaces of the tire in a state where the tire is fitted to an applicable rim and no load is applied to the tire.

Specific examples of tire sizes that satisfy the formula (I) include 145/60R18, 145/60R19, 155/55R18, 155/55R19, 155/70R17, 155/70R19, 165/55R20, 165/55R21, 165/60R19, 165/65R19, 165/70R18, 175/55R19, 175/55R20, 175/55R22, 175/60R18, 185/55R19, 185/60R20, 195/50R20, and 195/55R20.

Examples of the tire include pneumatic tires and airless (solid) tires, and among them, pneumatic tires are preferable. The tire can be used as a tire for a passenger car, a tire for a large-sized passenger car, a tire for a large-sized SUV, a heavy duty tire for a truck, a bus, or the like, a tire for a light truck, a tire for a motorcycle, a tire for racing (high-performance tire), etc. In addition, the tire can be used as a tire for winter (a studless tire, a snow tire, a stud tire, etc.).

Among them, the present invention is particularly preferably applied to a pneumatic tire for a passenger car. In addition, the pneumatic tire for a passenger car preferably satisfies the formula (I). This is because the pneumatic tire for a passenger car that satisfies the formula (1) tends to have problems with low fuel consumption performance and chipping resistance.

EXAMPLES

The present invention will be specifically described by means of examples, but the present invention is not limited to these examples.

Various chemicals used in the examples and comparative examples are described below.

NR: RSS#3

SBR 1: modified SBR (styrene content: 25% by mass, vinyl content: 60% by mass, Mw: 300 thousand) synthesized in Production Example 1 below.

SBR 2: modified SBR (styrene content: 35% by mass, vinyl content: 50% by mass, Mw: 600 thousand) synthesized in Production Example 2 below.

BR: BR150B (cis content: 95% by mass or greater) manufactured by Ube Industries, Ltd.

Carbon black: SHOBLACK N220 ($N_2SA$: 112 $m^2/g$) manufactured by Cabot Japan K.K.

Silica 1: 9100GR ($N_2SA$: 235 $m^2/g$) manufactured by Evonik Industries Ag.

Silica 2: Zeosil 1115MP ($N_2SA$: 115 $m^2/g$) manufactured by Solvay Japan, Ltd.

Silane coupling agent 1: Si266 (bis(3-triethoxysilylpropyl)disulfide) manufactured by Evonik Degussa GmbH.

Silane coupling agent 2: NXT-Z45 (copolymer of linking unit A and linking unit B (linking unit A: 55% by mole, linking unit B: 45% by mole)) manufactured by Momentive.

Resin 1: Sylvatraxx 4401 (copolymer of $\alpha$-methylstyrene and styrene, softening point: 85°C) manufactured by Arizona Chemical Company.

Resin 2: 40MS (ethylene-propylene-styrene copolymer, softening point: 78°C, EP content: 82% by mass) manufactured by Struktol Company of America.

Oil: Diana Process Oil NH-70S (aromatic process oil) manufactured by Idemitsu Kosan Co., Ltd.

Wax: OZOACE 0355 manufactured by NIPPON SEIRO CO., LTD.

Stearic acid: Stearic Acid "CAMELLIA" manufactured by NOF Corporation.

Zinc oxide: Ginrei R manufactured by Toho Zinc Co., Ltd.

Basic zinc carbonate: basic zinc carbonate manufactured by SEIDO CHEMICAL INDUSTRY CO., LTD.

Antioxidant 1: NOCRAC 6C (N-(1,3-dimethylbutyl)-N'-phenyl-p-phenylenediamine) manufactured by Ouchi Shinko Chemical Industrial Co., Ltd.

Antioxidant 2: NOCRAC RD (poly(2,2,4-trimethyl-1,2-dihydroquinoline)) manufactured by Ouchi Shinko Chemical Industrial Co., Ltd.

Sulfur: HK-200-5 (powdery sulfur containing 5% of oil) manufactured by Hosoi Chemical Industry Co., Ltd.

Vulcanization accelerator 1: NOCCELER CZ (N-cyclohexyl-2-benzothiazolyl sulfenamide) manufactured by Ouchi Shinko Chemical Industrial Co., Ltd.

Vulcanization accelerator 2: NOCCELER D (1,3-diphenylguanidine) manufactured by Ouchi Shinko Chemical Industrial Co., Ltd.

(Production Example 1)

A nitrogen-purged autoclave reactor was charged with cyclohexane, tetrahydrofuran, styrene, and 1,3-butadiene. The temperature of the contents of the reactor was adjusted to 20°C, and then n-butyllithium was added to initiate polymerization. The polymerization was carried out under heat insulating conditions, and the maximum temperature reached 85°C. When the polymerization conversion rate reached 99%, 1,3-butadiene was added to the reaction solution, and further polymerization was carried out for five minutes. Thereafter, N-(3-dimethylaminopropyl)acrylamide was added as a modifier to the reaction solution, and reaction was carried out. After the end of the polymerization reaction, 2,6-di-tert-butyl-p-cresol was added to the reaction solution. Subsequently, the solvent was removed by steam stripping, and drying by a heat roll adjusted to a temperature of 110°C was performed to obtain an SBR 1.

(Production Example 2)

A nitrogen-purged autoclave reactor was charged with cyclohexane, tetrahydrofuran, styrene, and 1,3-butadiene. The temperature of the contents of the reactor was adjusted to 20°C, and then n-butyllithium was added to initiate polymerization. The polymerization was carried out under heat insulating conditions, and the maximum temperature reached 85°C. When the polymerization conversion rate reached 99%, 1,3-butadiene was added to the reaction solution, and further polymerization was carried out for five minutes. Thereafter, 3-diethylaminopropyltriethoxysilane was added as a modifier to the reaction solution, and reaction was carried out. After the end of the polymerization reaction, 2,6-di-tert-butyl-p-cresol was added to the reaction solution. Subsequently, the solvent was removed by steam stripping, and drying by a heat roll adjusted to a temperature of 110°C was performed to obtain an SBR 2.

(Analysis of SBR)

SBR structure identification (measurement of styrene content and vinyl content) was performed using a JNM-ECA series device manufactured by JEOL Ltd. The measurement was performed by dissolving 0.1 g of a polymer in 15 ml of toluene, slowly pouring the solution into 30 ml of methanol to reprecipitate the polymer, drying the reprecipitated polymer under reduced pressure, and measuring the dried polymer.

<Examples and Comparative Examples>

Each cap tread rubber composition and each base tread rubber composition described in Table 1 were kneaded with a Banbury mixer to obtain kneaded products.

The obtained unvulcanized rubber composition (cap tread rubber composition) was press-vulcanized at 170°C for 12 minutes with a mold having a thickness of 0.5 mm, to obtain a vulcanized cap tread rubber composition.

Moreover, the obtained unvulcanized rubber compositions were molded into the shapes of a cap tread and a base tread, respectively, and attached together with other tire members on a tire-shaping machine, and press-vulcanization was performed at 150°C for 30 minutes, to obtain a test tire (tire size: 175/60R18).

The obtained vulcanized cap tread rubber compositions were evaluated as described below, using the test tires. The results are shown in Table 1.

<Low Fuel Consumption Performance>

The rolling resistance when a test tire was caused to run with a rim (18×5JJ) at an internal pressure of 260 kPa, a load of 3.43 kN, and a speed of 80 km/h was measured using a rolling resistance tester. The rolling resistance is shown as an index. The higher the index is, the better the low fuel consumption performance is. The index is indicated by the following formula.

$$\text{(Low fuel consumption performance)} = \text{(rolling resistance of tire of Comparative Example 1)} / \text{(rolling resistance of tire for each blending formula)} \times 100$$

<Fracture Properties>

A No. 3 dumbbell type test piece was produced from a vulcanized cap tread rubber composition (vulcanized rubber composition), and a tensile test was carried out at a tensile speed of 500 mm/min according to JIS K6251 "Rubber, vulcanized or thermoplastic-Determination of tensile stress-strain properties". The initial elongation at break EB (%) at

23°C±2°C and the elongation at break EB (%) after the following deterioration conditions were measured, and a post-deterioration EB maintenance rate (%) (= EB after deterioration / EB before deterioration × 100) was calculated.

(Deterioration Conditions)

The vulcanized cap tread rubber composition was thermally deteriorated in an oven (at 80°C for 168 hours).
The post-deterioration EB maintenance rate for each blending formula is shown as an index by the following formula with the post-deterioration EB maintenance rate of Comparative Example 1 being regarded as 100. A higher index indicates that the deterioration suppression performance is better.

(Post-deterioration EB maintenance rate (index)) = (post-deterioration EB maintenance rate for each blending formula / post-deterioration EB maintenance rate of Comparative Example 1) × 100

<Chipping Resistance>

Each test tire was fitted to a rim (18×5JJ), the air pressure thereof was adjusted to 230 kPa, and the tire was mounted to a test vehicle. The test vehicle ran 5,000 km on an unpaved road, and then the total sum of the areas of defects (chips or groove-shaped flaws with 1 square mm or more occurring on the tread surface) was measured by visually observing the tire. The evaluation result was indexed by the formula 100 × (total area of Comparative Example 1 + 1) / (total area of each example + 1). A higher index indicates that the chipping resistance is higher.

[Table 1]

Cap tread and base tread

| | | Example | | | | | | | | | Comparative Example | | | | |
|---|---|---|---|---|---|---|---|---|---|---|---|---|---|---|---|
| | | 1 | 2 | 3 | 4 | 5 | 6 | 7 | 8 | 9 | 1 | 2 | 3 | 4 | 5 |
| Cap blending formula (parts by mass) | NR | 25 | 25 | 25 | 25 | 25 | 25 | 25 | 25 | 40 | 25 | 25 | 25 | 25 | 25 |
| | SBR 1 | 55 | 55 | 55 | 55 | 55 | 55 | | 55 | 40 | 55 | 55 | 55 | 55 | |
| | SBR 2 | | | | | | | 55 | | | | | | | 55 |
| | BR | 20 | 20 | 20 | 20 | 20 | 20 | 20 | 20 | 20 | 20 | 20 | 20 | 20 | 20 |
| | Carbon black | 5 | 5 | 5 | 5 | 5 | 5 | 5 | 5 | 5 | 5 | 5 | 5 | 5 | 5 |
| | Silica 1 | 110 | 110 | 110 | 110 | 110 | 80 | 80 | 110 | 110 | | | | | |
| | Silica 2 | | | | | | | | | | 110 | 110 | 110 | 110 | 110 |
| | Silane coupling agent 1 | 8 | 8 | 8 | 8 | | | | 8 | 8 | 8 | 8 | 8 | | 8 |
| | Silane coupling agent 2 | | | | | 8 | 8 | 8 | | | | | | 8 | |
| | Resin 1 | 10 | 10 | 10 | 10 | 10 | 10 | 10 | 10 | 10 | 10 | 10 | 10 | 10 | 10 |
| | Oil | 10 | 10 | 10 | 10 | 10 | 10 | 10 | 10 | 10 | 10 | 10 | 10 | 10 | 10 |
| | Wax | 2 | 2 | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 | 2 | 2 |
| | Zinc oxide (zinc element amount) | 2.5 (2.0) | 2.0 (1.6) | 2.0 (1.6) | 2.0 (1.6) | 2.0 (1.6) | 2.0 (1.6) | 2.0 (1.6) | | 2.0 (1.6) | 3.0 (2.4) | 2.0 (1.6) | 3.0 (2.4) | 3.0 (2.4) | 3.0 (2.4) |
| | Basic zinc carbonate (zinc element amount) | | | | | | | | 2.0 (1.6) | | | | | | |
| | Antioxidant 1 | 2 | 2 | 2 | 2 | 2 | 2 | 2 | 2 | 2 | 2 | 2 | 2 | 2 | 2 |
| | Antioxidant 2 | 0.8 | 0.8 | 0.8 | 0.8 | 0.8 | 0.8 | 0.8 | 0.8 | 0.8 | 0.8 | 0.8 | 0.8 | 0.8 | 0.8 |
| | Sulfur | 1.9 | 1.9 | 1.3 | 1.3 | 1.3 | 1.3 | 1.3 | 1.9 | 1.9 | 1.3 | 1.9 | 1.9 | 1.9 | 1.9 |
| | Vulcanization accelerator 1 | 1.1 | 1.1 | 2.0 | 2.0 | 2.0 | 2.0 | 2.0 | 1.1 | 1.1 | 2.0 | 1.1 | 1.1 | 1.1 | 1.1 |
| | Vulcanization accelerator 2 | 2.0 | 2.0 | 2.0 | 2.0 | 2.0 | 2.0 | 2.0 | 2.0 | 2.0 | 2.0 | 2.0 | 2.0 | 2.0 | 2.0 |
| Total vinyl content/amount of silica | | 0.30 | 0.30 | 0.30 | 0.30 | 0.30 | 0.41 | 0.34 | 0.30 | 0.22 | 0.30 | 0.30 | 0.30 | 0.30 | 0.30 |
| Base blending formula (parts by mass) | NR | 60 | 60 | 60 | 60 | 60 | 60 | 60 | 60 | 60 | 60 | 60 | 60 | 60 | 60 |
| | BR | 40 | 40 | 40 | 40 | 40 | 40 | 40 | 40 | 40 | 40 | 40 | 40 | 40 | 40 |
| | Carbon black | 30 | 30 | 30 | 30 | 30 | 30 | 30 | 30 | 30 | 30 | 30 | 30 | 30 | 30 |
| | Silica 2 | 30 | 30 | 30 | 30 | 30 | 30 | 30 | 30 | 30 | 30 | 30 | 30 | 30 | 30 |
| | Silane coupling agent 1 | 2.4 | 2.4 | 2.4 | 2.4 | 2.4 | 2.4 | 2.4 | 2.4 | 2.4 | 2.4 | 2.4 | 2.4 | 2.4 | 2.4 |
| | Resin 2 | | | | 5 | 5 | 5 | 5 | | | | | | | |
| | Antioxidant | 2 | 2 | 2 | 2 | 2 | 2 | 2 | 2 | 2 | 2 | 2 | 2 | 2 | 2 |
| | Wax | 2 | 2 | 2 | 2 | 2 | 2 | 2 | 2 | 2 | 2 | 2 | 2 | 2 | 2 |
| | Oil | 10 | 10 | 10 | 10 | 10 | 10 | 10 | 10 | 10 | 10 | 10 | 10 | 10 | 10 |
| | Stearic acid | 2 | 2 | 2 | 2 | 2 | 2 | 2 | 2 | 2 | 2 | 2 | 2 | 2 | 2 |
| | Zinc oxide (zinc element amount) | 3.0 (2.4) | 3.0 (2.4) | 3.0 (2.4) | 3.0 (2.4) | 3.0 (2.4) | 3.0 (2.4) | 3.0 (2.4) | 3.0 (2.4) | 3.0 (2.4) | 3.0 (2.4) | 3.0 (2.4) | 3.0 (2.4) | 3.0 (2.4) | 3.0 (2.4) |
| | Sulfur | 2 | 2 | 2 | 2 | 2 | 2 | 2 | 2 | 2 | 2 | 2 | 2 | 2 | 2 |
| | Vulcanization accelerator 1 | 2 | 2 | 2 | 2 | 2 | 2 | 2 | 2 | 2 | 2 | 2 | 2 | 2 | 2 |
| Evaluation | Low fuel consumption performance (index) | 93 | 92 | 92 | 92 | 103 | 147 | 131 | 87 | 81 | 100 | 100 | 101 | 115 | 93 |
| | Post-deterioration EB maintenance rate (index) | 115 | 121 | 122 | 124 | 126 | 129 | 131 | 125 | 121 | 100 | 90 | 91 | 93 | 93 |
| | Chipping resistance (index) | 116 | 123 | 127 | 128 | 133 | 135 | 138 | 126 | 142 | 100 | 92 | 93 | 92 | 97 |
| | Combined performance | 324 | 336 | 340 | 343 | 362 | 411 | 400 | 337 | 344 | 300 | 281 | 285 | 300 | 282 |

From Table 1, combined performance of low fuel consumption performance, deterioration suppression performance, and chipping resistance (representing the total sum of three indexes for low fuel consumption performance, post-deterioration EB maintenance rate (deterioration suppression performance), and chipping resistance) was significantly improved for the tire that has a cap layer and a base layer containing the outer rubber layer rubber composition (cap tread rubber composition) and the inner rubber layer rubber composition based on the predetermined blending formulas and that satisfies the formula (1).

## Claims

1. A tire comprising a tread having two or more layers, wherein

   of two layers adjacent to each other in a tire radial direction in the tread,
   an outer rubber layer on an outer side in the tire radial direction is formed from an outer rubber layer rubber composition containing a rubber component containing 25% by mass or more of an isoprene-based rubber and 25% by mass or more of a styrene-butadiene rubber, a silica having a nitrogen adsorption specific surface area of 200 $m^2/g$ or greater, sulfur, and a zinc-containing compound, and
   an inner rubber layer on an inner side in the tire radial direction is formed from an inner rubber layer rubber composition containing a rubber component and a zinc-containing compound, and
   the tire satisfies the following formula (1),
   [Math. 1]

$$\begin{array}{c}\text{amount of zinc element per 100 parts by mass of rubber component}\\ \text{contained in outer rubber layer rubber composition}\\ < \text{amount of zinc element per 100 parts by mass of rubber component}\\ \text{contained in inner rubber layer rubber composition}\end{array} \qquad (1)$$

2. The tire according to claim 1, wherein the tire satisfies the following formula,

   [Math. 2]

$$\frac{\begin{array}{c}\text{amount of zinc element per 100 parts by mass of rubber component}\\ \text{contained in outer rubber layer rubber composition}\end{array}}{\begin{array}{c}\text{amount of zinc element per 100 parts by mass of rubber component}\\ \text{contained in inner rubber layer rubber composition}\end{array}} \leqq 0.7$$

3. The tire according to claim 1 or 2, wherein the tire satisfies the following formula (2),
   [Math. 3]

$$\frac{\begin{array}{c}\text{amount of sulfur per 100 parts by mass of rubber component}\\ \text{contained in outer rubber laver rubber composition}\end{array}}{\begin{array}{c}\text{amount of vulcanization accelerator per 100 parts}\\ \text{by mass of rubber component contained in}\\ \text{outer rubber layer rubber composition}\end{array}} \leqq 1.0 \qquad (2)$$

4. The tire according to any one of claims 1 to 3, wherein the inner rubber layer rubber composition contains a resin having an unsaturated bond.

5. The tire according to any one of claims 1 to 4, wherein the outer rubber layer rubber composition contains a mercapto-based silane coupling agent.

6. The tire according to any one of claims 1 to 5, wherein an amount of the silica having a nitrogen adsorption specific

surface area of 200 $m^2/g$ or greater per 100 parts by mass of the rubber component contained in the outer rubber layer rubber composition is 5 to 170 parts by mass.

**7.** The tire according to any one of claims 1 to 6, wherein the tire satisfies the following formula (3),
[Math. 4]

$$\frac{\text{total vinyl content of styrene-butadiene rubber contained in outer rubber layer rubber composition}}{\text{amount of silica having nitrogen adsorption specific surface area of 200 m}^2\text{/g or greater per 100 parts by mass of rubber component contained in outer rubber layer rubber composition}} \leqq 0.50 \qquad (3)$$

**8.** The tire according to any one of claims 1 to 7, wherein the tire is a pneumatic tire for a passenger car.

**9.** The tire according to any one of claims 1 to 8, wherein a tire outer diameter Dt and a tire cross-section width Wt satisfy a relational expression of the following formula (I),
[Math. 5]

$$1963.4 \leqq \frac{Dt^2 \times \frac{\pi}{4}}{Wt} \leqq 2827.4 \qquad (I)$$

**Patentansprüche**

**1.** Reifen, umfassend einen Laufstreifen, der zwei oder mehr Schichten aufweist, wobei

von zwei Schichten, die im Laufstreifen in einer Reifenradialrichtung zueinander benachbart sind,
eine äußere Kautschukschicht auf einer in der Reifenradialrichtung äußeren Seite mit einer Außenkautschukschicht-Kautschukzusammensetzung gebildet ist, die eine 25 Massenprozent oder mehr eines Isopren-basierten Kautschuks und 25 Massenprozent oder mehr eines Styrol-Butadien-Kautschuks enthaltende Kautschukkomponente, ein Siliciumdioxid mit einer spezifischen Stickstoffadsorptionsoberfläche von 200 $m^2/g$ oder größer, Schwefel und eine zinkhaltige Verbindung enthält, und
eine innere Kautschukschicht auf einer in der Reifenradialrichtung inneren Seite mit einer Innenkautschukschicht-Kautschukzusammensetzung gebildet ist, die eine Kautschukkomponente und eine zinkhaltige Verbindung enthält, und
der Reifen der folgenden Formel (1) genügt,
[Math. 1]

$$\text{Menge an elementarem Zink pro 100 Massenteile in Außenkautschukschicht-Kautschukzusammensetzung enthaltener Kautschukkomponente} < \text{Menge an elementarem Zink pro 100 Massenteile in Innenkautschukschicht-Kautschukzusammensetzung enthaltener Kautschukkomponente} \qquad (1)$$

**2.** Reifen nach Anspruch 1, wobei der Reifen der folgenden Formel genügt,

[Math. 2]

$$\frac{\text{Menge an elementarem Zink pro 100 Massenteile in Außenkautschukschicht-Kautschukzusammensetzung enthaltener Kautschukkomponente}}{\text{Menge an elementarem Zink pro 100 Massenteile in Innenkautschukschicht-Kautschukzusammensetzung enthaltener Kautschukkomponente}} \leqq 0{,}7$$

3. Reifen nach Anspruch 1 oder 2, wobei der Reifen der folgenden Formel (2) genügt,
[Math. 3]

$$\frac{\text{Menge an Schwefel pro 100 Massenteile in Außenkautschukschicht-Kautschukzusammensetzung enthaltener Kautschukkomponente}}{\text{Menge an Vulkanisationsbeschleuniger pro 100 Massenteile in Außenkautschukschicht-Kautschukzusammensetzung enthaltener Kautschukkomponente}} \leqq 1{,}0 \quad (2)$$

4. Reifen nach einem der Ansprüche 1 bis 3, wobei die Innenkautschukschicht-Kautschukzusammensetzung ein Harz enthält, das eine ungesättigte Bindung aufweist.

5. Reifen nach einem der Ansprüche 1 bis 4, wobei die Außenkautschukschicht-Kautschukzusammensetzung ein mercaptobasiertes Silan-Kopplungsmittel enthält.

6. Reifen nach einem der Ansprüche 1 bis 5, wobei eine Menge des Siliciumdioxids mit einer Stickstoffadsorptionsoberfläche von 200 $m^2/g$ oder größer pro 100 Massenteile der in der Außenkautschukschicht-Kautschukzusammensetzung enthaltenen Kautschukkomponente 5 bis 170 Massenteile beträgt.

7. Reifen nach einem der Ansprüche 1 bis 6, wobei der Reifen der folgenden Formel (3) genügt,
[Math. 4]

$$\frac{\text{Gesamtvinylgehalt von in Außenkautschukschicht-Kautschukzusammensetzung enthaltenem Styrol-Butadien-Kautschuk}}{\text{Menge an Siliciumdioxid mit spezifischer Stickstoffadsorptionsoberfläche von 200 m}^2\text{/g oder größer pro 100 Massenteile in Außenkautschukschicht-Kautschukzusammensetzung enthaltener Kautschukkomponente}} \leqq 0{,}50 \quad (3)$$

8. Reifen nach einem der Ansprüche 1 bis 7, wobei der Reifen ein Luftreifen für einen Personenkraftwagen ist.

9. Reifen nach einem der Ansprüche 1 bis 8, wobei ein Reifenaußendurchmesser Dt und eine Reifenquerschnittsbreite Wt einem Vergleichsausdruck der folgenden Formel (I) genügen,
[Math. 5]

$$1963,4 \leqq \frac{Dt^2 \times \frac{\pi}{4}}{Wt} \leqq 2827,4 \quad (I)$$

**Revendications**

1. **1.** Pneu comprenant une bande de roulement ayant deux ou plus de deux couches, dans lequel

   parmi deux couches adjacentes l'une à l'autre dans une direction radiale du pneu dans la bande de roulement, une couche de caoutchouc extérieure sur un côté extérieur dans la direction radiale du pneu est formée à partir d'une composition de caoutchouc de couche de caoutchouc extérieure contenant un composant de caoutchouc contenant 25 % en masse ou plus de caoutchouc à base d'isoprène et 25 % en masse ou plus de caoutchouc styrène-butadiène, une silice ayant une surface spécifique par adsorption d'azote de 200 $m^2/g$ ou plus, du soufre, et un composé contenant du zinc, et une couche de caoutchouc intérieure sur un côté intérieur dans la direction radiale du pneu est formée à partir d'une composition de caoutchouc de couche de caoutchouc intérieure contenant un composant de caoutchouc et un composé contenant du zinc, et
   lequel pneu satisfaisant à la formule suivante (1) :
   [Formule mathématique 1]

   Quantité de zinc élémentaire pour 100 parties en masse de composant de caoutchouc contenu dans la composition de caoutchouc de couche de caoutchouc extérieure

   (1)

   < quantité de zinc élémentaire pour 100 parties en masse de composant de caoutchouc contenu dans la composition de caoutchouc de couche de caoutchouc intérieure.

**2.** Pneu selon la revendication 1, lequel pneu satisfaisant à la formule suivante :

[Formule mathématique 2]

$$\frac{\text{Quantité de zinc élémentaire pour 100 parties en masse de composant de caoutchouc contenu dans la composition de caoutchouc de couche de caoutchouc extérieure}}{\text{Quantité de zinc élémentaire pour 100 parties en masse de composant de caoutchouc contenu dans la composition de caoutchouc de couche de caoutchouc intérieure.}} \leq 0,7$$

**3.** Pneu selon la revendication 1 ou la revendication 2, lequel pneu satisfaisant à la formule suivante (2)
[Formule mathématique 3]

$$\frac{\text{Quantité de soufre pour 100 parties en masse de composant de caoutchouc contenu dans la composition de caoutchouc de couche de caoutchouc intérieure}}{\text{Quantité d'accélérateur de vulcanisation pour 100 parties en masse de composant de caoutchouc contenu dans la composition de caoutchouc de couche de caoutchouc extérieure.}} \leq 1{,}0 \quad (2)$$

4. Pneu selon l'une quelconque des revendications 1 à 3, dans lequel la composition de caoutchouc de couche de caoutchouc intérieure contient une résine ayant une liaison insaturée.

5. Pneu selon l'une quelconque des revendications 1 à 4, dans lequel la composition de caoutchouc de couche de caoutchouc extérieure contient un agent de couplage à base d'un mercapto-silane.

6. Pneu selon l'une quelconque des revendications 1 à 5, dans lequel la quantité de silice ayant une surface spécifique par adsorption d'azote de 200 $m^2/g$ ou plus pour 100 parties en masse de composant de caoutchouc contenu dans la composition de caoutchouc de couche de caoutchouc extérieure est de 5 à 170 parties en masse.

7. Pneu selon l'une quelconque des revendications 1 à 6, lequel pneu satisfaisant à la formule suivante (3), [Formule mathématique 4]

$$\frac{\text{Teneur totale en groupements vinyles du caoutchouc styrène-butadiène contenu dans la composition de caoutchouc de couche de caoutchouc extérieure}}{\text{Quantité de silice ayant une surface spécifique par adsorption d'azote de 200 } m^2/g \text{ ou plus pour 100 parties en masse de composant de caoutchouc contenu dans la composition de caoutchouc de couche de caoutchouc extérieure.}} \leq 0{,}50 \quad (3)$$

8. Pneu selon l'une quelconque des revendications 1 à 7, lequel pneu étant un pneumatique pour une voiture pour passagers.

9. Pneu selon l'une quelconque des revendications 1 à 8, dans lequel le diamètre extérieur Dt de pneu et la largeur de section transversale Wt de pneu satisfont à l'expression d'une relation selon la formule suivante (I), [Formule mathématique 5]

$$1963.4 \leqq \frac{Dt^2 \times \frac{\pi}{4}}{Wt} \leqq 2827.4 \quad (I)$$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012111795 A
- US 4414370 A
- JP S596207 A
- JP H558005 B
- JP H1313522 A
- US 5010166 A


### Non-patent literature cited in the description


- TREND. Toagosei Co., Ltd, 2000, 42-45